# EUROPEAN PATENT SPECIFICATION

(11) **EP 3 575 656 B1**
(45) Date of publication and mention of the grant of the patent: **15.07.2026**
(21) Application number: 19177249.0
(22) Date of filing: 29.05.2019
(51) Int. Cl.: F16L 5/08, F16J 15/02, E03F 5/04

(54) **METHOD FOR SEALING A SEALING LAYER AGAINST EDGE OF THROUGH HOLE AND CLAMPING RING USED THEREIN**
VERFAHREN ZUM ABDICHTEN EINER ISOLIERSCHICHT GEGEN DEN RAND EINES DURCHGANGSLOCHS UND DARIN EINGESETZTER SPANNRING
PROCÉDÉ DE SCELLEMENT D'UNE COUCHE ISOLANTE CONTRE LE BORD D'UN TROU TRAVERSANT ET BAGUE DE SERRAGE UTILISÉE EN SON SEIN

(30) Priority: 31.05.2018 FI 20185499
(43) Date of publication of application: 04.12.2019
(73) Proprietor: Vieser Oy, 61850 Kauhajoki as. (FI)
(72) Inventor: Jyllilä, Erkki, 61850 Kauhajoki (FI)
(74) Representative: Kolster Oy Ab

(56) References cited:
- EP-A1- 0 838 623
- WO-A1-80/01701
- DE-A1- 2 147 489
- DE-U1- 202005 008 176

## Description

### Background of the invention

The present invention relates to a method according to the preamble of claim 1 for installing a clamping ring to a duct opening in a floor or similar to ensure the tightness of a sealing layer thereon and the opening. The invention additionally relates to a clamping ring according to the preamble of claim 3, by means of which the water tightness between the sealing layer of the floor and the duct of the floor is ensured.

It is known to connect a sealing membrane or plastic carpet forming the sealing layer of the floor to a floor drain by a so-called clamping ring. In such a case, the sealing membrane or plastic carpet is bent against an inner edge of a drainage aperture on the floor drain. By pressing down a clamping ring in the drain, the sealing membrane or plastic carpet is pressed against a sealing ring on the inner wall of the floor drain. At the same time, the clamping ring is mechanically locked in the claws of the sealing ring or on the inner wall of the floor drain.

However, there are situations in which a sealing ring cannot achieve a tight enough joint between the sealing membrane or plastic carpet and the inner wall of a floor drain, making it possible for moisture to make it under the sealing layer. The problem arises in the form of the diverse implementations of the sealing layers, whereby their thickness may be notably different from site to site. Therefore, at times thin seal membranes are used, and at times thickish plastic carpets or comparable seals are used. The use of one and same clamping ring to achieve adequate pressing sets major challenges on the dimensioning of the clamping ring. When a sealing layer is made of a plastic carpet, in particular, the thickness of the plastic carpet may make it difficult to press it against the inner wall of a floor drain. A rigid plastic carpet may also cause the clamping ring to come off, which results in the sealing layer detaching from the floor drain. Moreover, it has become apparent that in particular when a plastic carpet is used as a sealing layer, the hardening of the plastic carpet due to aging may cause clamping rings to loosen. The tightness, too, with thinner membranes may be insufficient. Such a clamping ring becoming detached from the sealing layer may lead to situation where water may find its way under the sealing layer during flooding of a floor drain.

WO 80/01701 A1 discloses a known clamping ring for installation in a floor drain. DE 20 2005 008176 U1 discloses a sealing device for a conduit passing through an opening in a wall, the device comprising two clamping rings joined by locking means and an elastic seal element held in a recess formed by complementary sloping surfaces of the clamping rings, wherein the elastic seal element is expanded and pressed against the surrounding wall of a duct by tightening the locking means to bring the two clamping rings closer together.

### Brief description of the invention

It is thus an object of the invention to establish a new type of clamping ring by means of which water leaks under a sealing layer may be avoided. This object is achieved by the clamping ring and its installation method having the characteristics of the claims in accordance with this invention.

To be more specific, this installation method of the clamping ring in accordance with the invention is characterised by what is stated in the characterising part of claim 1. The inventive clamping ring is, in turn, characterised by what is stated in the characterising part of claim 3. Preferred embodiments of the invention are disclosed in the dependent claims.

The invention is based on the idea that the tightness of a sealing layer and the wall of a floor drain or another duct in the floor is ensured by a member which, when installed in the opening, establishes an adjustable radial pressing force, whereby the pressing force may always be adapted to suit the sealing layer being used.

The invention provides considerable advantages. Thus, the new inventive clamping ring does not, for example, change the dimensioning of the drainage aperture of the floor drain, whereby standard protective floor drain grates may be used to protect the drainage aperture.

The clamping ring of the invention may also be utilized to squeeze a sealing layer against the wall of any duct, regardless of whether the sealing layer is installed in a floor or wall.

By pressing the sealing layer against an adjacent wall, by utilizing a part protruding from the perimeter of the clamping ring, it is also possible to make sure that sealing layers of different thicknesses may be reliably fastened against the adjacent wall, regardless of their structural thickness.

When renovating floor drains of bathrooms, for example, the inventive solution provides the additional advantage that the elements affecting the tightness of the joint between the sealing layer and floor drain may be replaced with new parts without replacing the entire floor drain, and thus to be sure of the tightness in the future, too.

The invention also makes it possible to avoid breaking the frame structures of the floor drain by mechanical fasteners, reducing the leaking risks of the floor drain.

Other advantages provided by the invention are disclosed in the following more detailed description of specific embodiments of the invention.

### Brief description of the figures

In the following, some preferred embodiments of the invention will be explained in more detail and with reference to the accompanying drawing, in which
Figure 1 shows an exploded view of an embodiment of the present clamping ring;
Figure 2 shows the clamping ring of Figure 1 in its assembled form;
Figure 3 shows a schematic cross-section of the clamping ring according to Figure 1, installed in a floor drain;
Figure 4 shows an embodiment of a preassembled clamping ring of Figure 1, ready for installation in a floor drain, the clamping ring laying against a sealing layer;
Figure 5 shows the clamping ring of Figure 4 pressed with the sealing layer into a floor drain;
Figure 6 shows the clamping ring of Figure 4 tightened in place;
Figure 7 shows a schematic cross-section of a clamping ring according to a second embodiment, not in accordance with the present invention, installed in a floor drain and with its expanding seals;
Figure 8 show a schematic cross-section of an expanding clamping ring according to a third embodiment, not in accordance with the present invention, installed in a floor drain;
Figure 9 shows the clamping ring of Figure 8 tightened in place; and
Figure 10 shows a toothing on a skirt of a cylinder part of the clamping ring according to Figure 8.

### Detailed description of preferred embodiments

The present figures do not show the clamping in scale but the figures are schematic, illustrating the structure and operation of the preferred embodiments in principle. The structural parts shown by reference numbers in the attached figures then correspond to the structural parts marked by reference numbers in this specification.

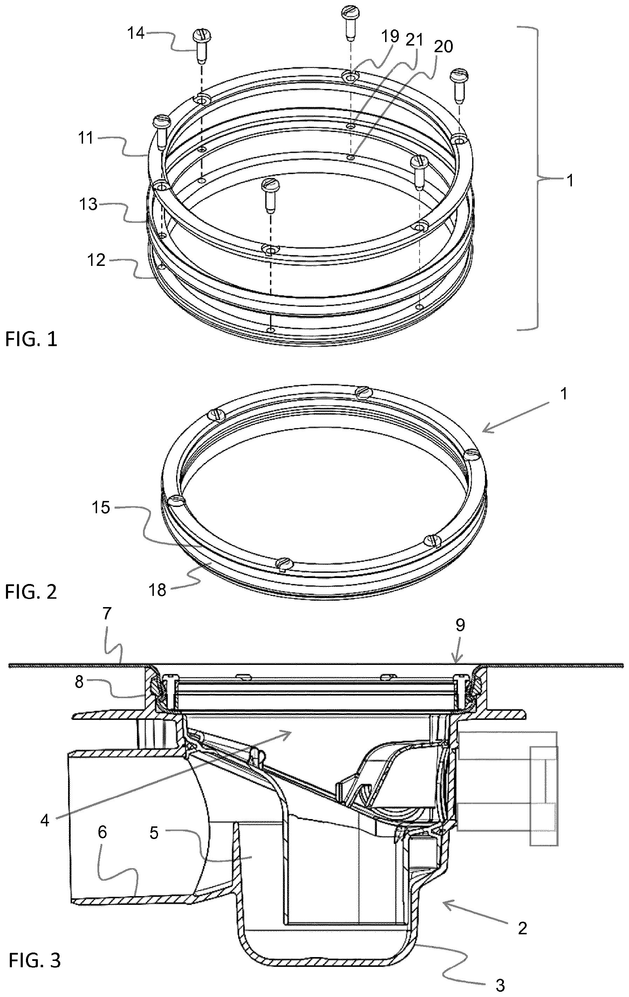

The exploded view of Figure 1 shows an embodiment of the present clamping ring 1. The clamping ring assembled in accordance with Figure 2 is shown in Figure 3, installed in a floor drain 2 known per se. The floor drain conventionally comprises a drainage aperture 4 leading to a bowl-like body 3, whereby the body additionally has at least a drain trap 5 and an outlet connection 6 to lead the wastewater led to the floor drain further to a sewage system of the premises. In addition to the outlet connection, the body may comprise one or more side inlets to guide wastewater from a sink and/or washing machine, for instance, to the floor drain. These inlets or the sewage system known per se are not separately shown in the attached drawings.

The clamping ring 1 according to Figure 1 is thus intended, in particular, to attach a sealing layer 7 to a floor drain 2 or a special extension ring (not shown) adapted to it. Obviously, there is nothing to prevent the use of this clamping ring to seal any floor or wall duct and a sealing layer installed on it against each other.

Such a sealing layer may be, for example, a sealing flange installed on waterproofing paint, a sealing membrane or a plastic carpet. Hereby the sealing layer is bent by using work methods known per se in the drainage aperture 4 of the floor drain. The waste water led in the floor drain is prevented from getting under the sealing layer surrounding the floor drain by locking the sealing layer 7 by the use of the clamping ring 1 against a collar 8 adjacent to the drainage aperture of the floor drain or the extension ring thereof. Such a collar sets on a floor drain arranged in the floor structure so that it is substantially perpendicular to a floor surface 9. A mating surface 10 protrudes from the collar, advantageously from the end opposite the floor structure, preventing the clamping ring to be introduced too deep in the body 3.

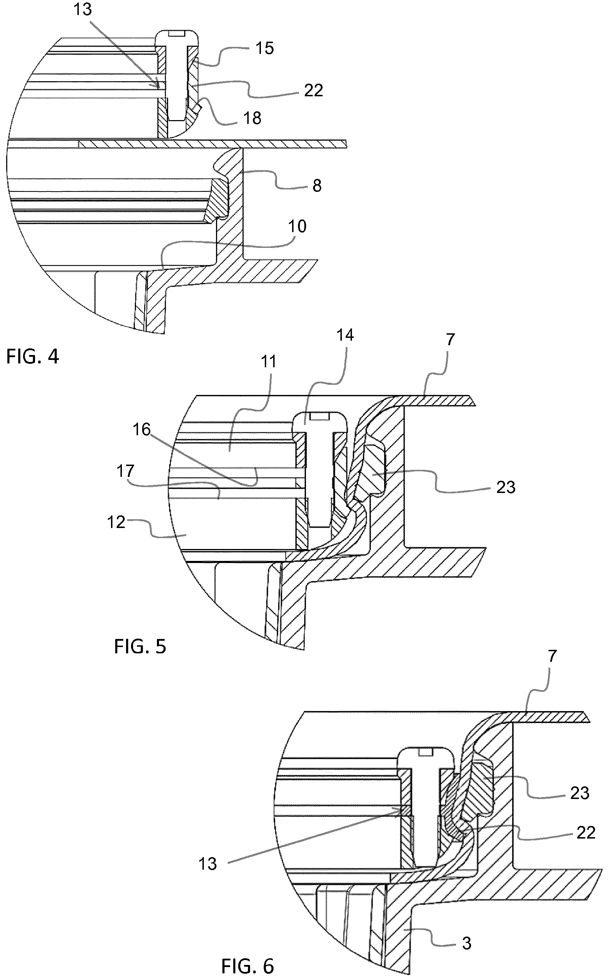

It is characteristic to the clamping ring 1 presented here that the clamping ring has three parts. Thus, the clamping ring comprises a frame ring 11 and an expansion ring 12 setting against the frame ring. Between the frame ring and expansion ring coupling thereto, a clamping ring seal 13 is arranged. The clamping ring seal extends outside an outer mantle of a cylinder formed by the frame ring and expansion ring, whereby its protrusion is adjustable by means of locking means 14, such as screws, mechanically pressing the frame ring and expansion ring against each other. The diameter of the clamping ring may thus be extended by tightening the frame ring and expansion ring against each other by the locking means. As the clamping ring seal 13 is compressed between the frame ring and expansion ring, it protrudes from the cylindrical outer surface of the clamping ring, enlarging the diameter of the clamping ring seal. At the same time, the clamping ring seal made of elastic material is pressed against the collar of the floor drain, as shown in Figure 6.

In this embodiment, the frame ring 11 comprises a substantially circular member. The member has a face 15 oriented towards the collar 8 of the floor drain 2 or its extension ring, and forming a part of the cylinder outer mantle. The frame ring further has a bottom surface 16, which bottom surface, when the frame ring is installed in place in the floor drain, is oriented towards the mating surface 10 protruding from the collar. The expansion ring 12, positioned under the frame ring in its operational position, in turn comprises an mounting surface 17 oriented towards the bottom surface of the frame ring, and a second face 18 oriented towards the collar 8 and forming a part of the cylinder outer mantle.

Both the frame ring 11 and expansion ring 12 comprise members 19 and 20 to receive the mechanical locking means. These may include, for example, the perforation that can be seen in Figures 2 and 5. The members receiving the mechanical locking means are placed at intervals along the length of said rings in the corresponding places.

When said clamping ring seal 13 is arranged at least partly between the bottom surface 16 and installation surface 17, it may also be provided with members 21 that receive mechanical locking means, to simplify installation. When the mechanical locking means press both the frame ring 11 and expansion ring 12 against each other, the protrusion of the clamping ring seal outside faces 15 and 18 is achieved. The amount of the protrusion may be adjusted, for example, by shaping the faces 15 and 18.

The frame ring 11 and expansion ring 12 are advantageously made of fibreglass-enforced plastic material, but they may likewise be made of another plastic mixture, metal, or alloy suitable for the purpose. The clamping ring seal 13 is advantageously manufactured of a rubber or plastic material having adequate flexibility. As relates to the structure, the frame ring, expansion ring, and clamping ring seal may be solid, but it may also be partly or entirely hollow.

The operation of the clamping ring 1 is described in closer detail in Figures 4 to 6.

In them, a pressure ring part 22 present in the clamping ring seal 13 and setting against the faces 15 and 18 may be seen. It is in particular this pressure ring that is adapted to project against the collar 8 of the floor drain as the faces approach each other. By making the faces 15 and 18 sloping against each other, that is, by causing a conical recess in the cylindrical part of the outer mantle of the clamping ring 1, the faces that are pressing against each other also achieve a more effective thrust motion, which is exerted on this pressure ring, taking it

towards the collar 8. In addition, the faces orienting against each other are additionally adapted to cause a deformation in the pressure ring, which guides a part of the pressure ring closer to the collar or a sealing ring 23 provided therein, for example.

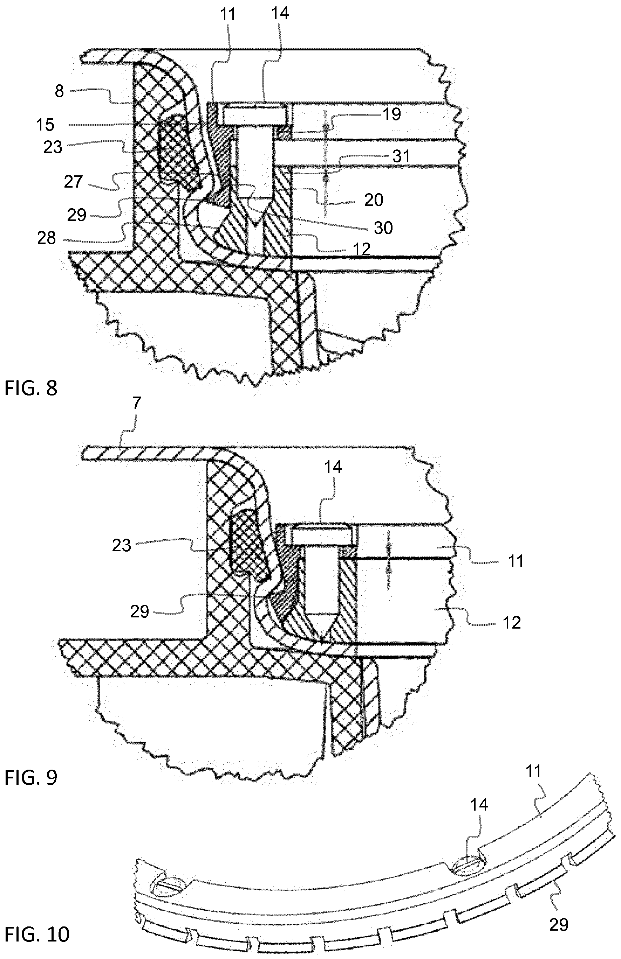

The pressure ring 22 surface on the collar side may be provided with a surface profiling that adds to the friction between the pressure ring and collar. The pressure ring skirt on the face 18 side may also be formed with a toothing, whereby its deformation, that is, bending towards the collar or, for example, the sealing ring 23 therein is facilitated. Such a toothing is shown in Figure 10.

When the sealing layer 7 is installed by the aforementioned embodiment of the present clamping ring 1 to a floor drain 2, for example, the detachment of the sealing layer from the floor drain is prevented by pressing the sealing layer by utilising the clamping ring seal 13 against the collar 8 of the floor drain and/or the sealing ring 23 provided therein, in a manner shown in Figure 4 to 6, for example. At first, the frame ring 11, expansion ring 12, and clamping ring seal 13 with its pressure ring 22 are attached to each other by mechanical locking means 14, as shown in Figure 4.

Then, the sealing layer is brought to the duct in a manner known per se, to the drainage aperture of the floor drain, for example, guiding the sealing layer against the collar of the floor drain. Now, the clamping ring having a diameter slightly smaller than the diameter of the drainage aperture of the floor drain is pressed into the floor drain. The expansion ring pressed into the floor drain advantageously sets against the mating surface 10 in the floor drain while the clamping ring is pressing the sealing layer towards the collar, cf. Figure 5. In the final step according to Figure 6, the frame ring 11 is pressed against the expansion ring 12 by tightening the mechanical locking means 14. Due to the compression, the protrusion of the pressure ring 22 in the clamping ring seal 13 from the cylindrical outer surface of the clamping ring is increased, and the clamping ring seal is pressed against the collar of the floor drain and/or the sealing ring therein.

A similar working order is utilised when another joint between a duct of a floor or wall and the sealing layer 7 is sealed by pressing the sealing layer against the wall 8 of the duct, such a wall corresponding to the collar of a floor drain as described in the above.

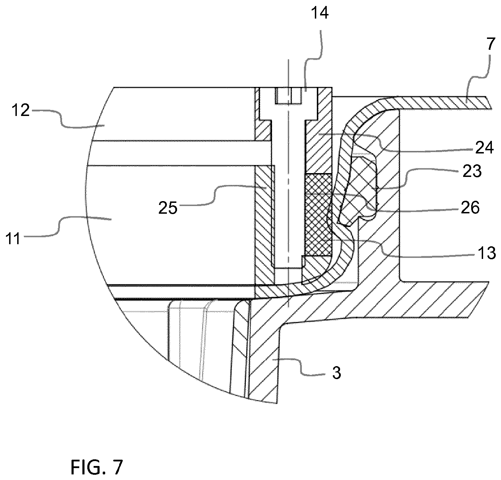

A second of the clamping ring 1, not in accordance with the present invention, comprises two parts partly guided within each other, as shown in Figure 7. Such a clamping ring is hereby formed of the frame ring 11 and expansion ring 12 setting on this frame ring, and the clamping ring seal 13 installed on their outer periphery. The frame ring and expansion ring are connected by means of locking means 14, such as screws, mechanically pressing them towards each other. For this purpose, both the frame ring and expansion ring have members 19 and 20 to receive the mechanical locking means. These may include, for example, a perforation. The members receiving the mechanical locking means are placed at intervals along the length of said rings in the corresponding places. These members receiving the locking means are realised so that the members 19 in the frame ring are larger than the locking means, allowing free movement of the locking means in the direction of their longitudinal axis. The locking means in the expansion ring, in turn, are arranged to grab the members 20, whereby the locking means pull the expansion ring against the frame ring.

In this second embodiment present, the frame ring 11 and expansion ring 12 comprise a base part, from which substantially parallel cylinder means 24 and 25 protrude. When the inner diameter of the one of the cylinder means is larger is larger than the outer diameter of the other cylinder means, these cylindrical means set within each other when the frame ring and expansion ring are connected to each other. The cylindrical means also define between them a groove 26 in which said clamping ring seal 13 may be arranged. As a result of the frame ring and expansion ring approaching, the clamping ring seal expands whereby it protrudes and increases the diameter of the clamping ring towards the collar 8 of the floor drain and/or against the sealing ring 23 therein. The amount of the protrusion may be adjusted by material selection of the clamping ring seal as well as by selecting different thicknesses for it.

A third embodiment of the clamping ring 1, not in accordance with the present invention, comprises two parts partly guidable within each other, as shown in Figures 8 and 9. Therefore, such a clamping ring is formed exclusively of the frame ring 11 and the expansion ring 12 setting on this frame ring. The frame ring and expansion ring are connected by means of locking means 14, such as screws, mechanically pressing them towards each other. For this purpose, both the frame ring and expansion ring have members 19 and 20 to receive the mechanical locking means. These may include, for example, the perforation that can be seen in Figures 7 and 8. The members receiving the mechanical locking means are placed at intervals along the length of said rings in the corresponding places. These members receiving the locking means are realised so that the members 19 in the frame ring are larger than the locking means, allowing free movement of the locking means in the direction of their longitudinal axis. The locking means in the expansion ring, in turn, are arranged to grab the members 20, whereby the locking means pull the expansion ring against the frame ring.

In this third embodiment present, the frame ring 11 comprises a substantially circular member. The member has a face 15 oriented towards the collar 8 of the floor drain 2 or its extension ring, and forming a part of the cylinder outer mantle. The frame ring has a narrowish cylinder part 27 protruding from it in its operational position towards the expansion ring 12, which cylinder part is in its operational position arranged to press by its lower edge against the expansion ring 12 positioned under the frame ring. By arranging in the expansion ring a cylindrical surface 28 oriented and narrowing towards the frame ring, the tightening of the locking means cause a deformation on the cylinder part. The cylinder part consequently bends, as a result of the frame ring and expansion ring approaching, towards the collar 8 or the floor drain and/or the sealing ring 23 therein.

The grip may be further enhanced by arranging a lip 29 at the bottom edge of the cylinder part 27, which presses against the collar 8 or cooperates with the sealing ring 23 in the collar. The deformation taking place may in turn be further enhanced by arranging a web 30 in the cylinder part encircling it. Because the material strength of the cylinder part is weaker at such a web, the deformation caused by the compression of the cylindrical surface and directed towards the collar is with a lesser use of force.

The skirt of the cylinder part 24 on the cylindrical surface 18 side may also be formed toothed or grooved, whereby its deformation, that is, bending towards the collar or the sealing ring 23 therein, is facilitated. Such a toothing is shown in Figure 10.

The cooperation between the frame ring 11 and expansion ring 12 may be ensured by forming a flange 31 on the expansion ring, which protrudes towards the frame ring and encircles the expansion ring. As shown in Figures 8 and 9, this flange is arranged to be guided inside the cylinder part 27 of the frame ring as the parts of the clamping ring are connected to each other. When the locking means 14 are being tightened, the cylinder part will thus slide along the flange, hitting the cylindrical surface 28 whereby the outer tip of the cylinder surface is forced in a radial direction towards the collar 8 of the floor drain.

When the sealing layer 7 is installed by the clamping ring 1 according to the second embodiment present to a floor drain 2, the detachment of the sealing layer from the floor drain is prevented by pressing the sealing layer against the collar 8 of the floor drain and/or the sealing ring 23 present therein, in a manner shown in Figures 7 and 8. The work progresses so that first the frame ring 11 and expansion ring 12 are joined by mechanical locking means 14. The clamping ring at this stage has a diameter that is slightly smaller than the diameter of the drainage aperture of the floor drain. Next, the clamping ring is pressed into the floor drain and against the sealing layer applied thereto, in a manner known per se. When the clamping ring has settled at the desired depth in the drainage aperture, the pressing of frame ring 11 and expansion ring 12 against each other is commenced by tightening the mechanical locking means 14. Resulting from the compression, the cylindrical surface 25 of the expansion ring causes an expanding deformation of the clamping ring on the cylinder part 27 of the frame ring. The cylinder part thus bends towards the collar 8 of the floor drain and/or the sealing ring 23 therein.

A similar working order is utilised when another joint between a duct of a floor or wall and the sealing layer 7 is sealed by pressing the sealing layer against the wall 8 of the duct, such a wall corresponding to the collar of a floor drain as described in the above.

A person skilled in the art will find it obvious that, as technology advances, the basic idea of the invention may be implemented in many different ways. The invention and its embodiments are thus not restricted to the above-described examples but may vary within the scope of the claims.

## Claims

1. A method for sealing a sealing layer (7) against an edge of a drainage aperture of a duct by using a clamping ring (1), whereby
the sealing layer (7) is pressed against a wall (8) in the duct by means of the clamping ring (1) guided in the duct, and
the clamping ring (1) is formed out of a circular frame ring (11) and expansion ring (12) connected to each other by mechanical locking means (14), said frame ring (11) and expansion ring (12) together forming a cylinder outer mantle so that
as sealing begins, the clamping ring (1) has a diameter that is smaller than the diameter of the drainage aperture of the duct,
the clamping ring (1) is guided to the drainage aperture where it is placed against the sealing layer (7),
the frame ring (11) and expansion ring (12) of the clamping ring (1) are pressed against each other by tightening the mechanical locking means (14), such that
the frame ring (11) and expansion ring (12) pressed against each other cause a radial expanding deformation of the clamping ring (1), and the clamping ring (1) presses the sealing layer (7) against the wall (8) and/or a sealing ring (23) therein,
the method including
forming on the frame ring (11) a face (15), and
forming on the expansion ring (12) a second face (18),
**characterised in that**
the face (15) of the frame ring (11) and the second face (18) of the expansion ring (12) are oriented towards the wall (8) of the duct and are sloped towards each other to form a conical recess, into which
recess a clamping ring seal (13) is installed, whereby
the mechanical locking means (14) pressing the frame ring (11) and the expansion ring (12) against each other achieve a protrusion in the clamping ring seal (13), extending outside the cylinder outer mantle of the clamping ring (1), and
the clamping ring seal (13) presses against the wall (8) of the duct and/or the sealing ring (23) therein.

2. A method as claimed in claim 1, c h a r a c t e r i s e d by
providing the clamping ring seal (13) with a pressure ring (22) that sets against the face (15) of the frame ring (11) and the second face (18) of the expansion ring (12), wherein
compressing the clamping ring seal (13) pushes said pressure ring (22) towards the wall (8) of the duct.

3. A clamping ring (1) for installation in a floor drain (2) or similar duct,
such a clamping ring (1) comprising
a frame ring (11),
an expansion ring (12) setting against the frame ring (11), said frame ring (11) and expansion ring (12) together forming a cylinder outer mantle,
locking means (14) mechanically pressing the frame ring (11) and expansion ring (12) against each other, and
a clamping seal ring (13) increasing the diameter of the clamping ring (1) by the combined effect of the frame ring (11) and expansion ring (12),
wherein
the frame ring (11) comprises a face (15), and
the expansion ring (12) comprises a second face (18),
**characterised in that**
the face (15) of the frame ring (11) and the second face (18) of the expansion ring (12) are oriented radially outwards and are sloped towards each other to form a conical recess, into which
recess the clamping ring seal (13) is installed, such that
the protrusion of the clamping ring seal (13) from the cylinder outer mantle of the clamping ring (1) is arranged to be dependent on a distance between the frame ring (11) and the expansion ring (12) controlled by the mechanical locking means (14).

4. A clamping ring (1) as claimed in claim 3, **characterised in that** the clamping ring seal (13) comprises a pressure ring (22) that sets against the face (15) of the frame ring (11) and the second face (18) of the expansion ring (12).

5. A clamping ring as claimed in claim 3 or 4, **characterised in that** the clamping ring seal (13) is made of an elastic material.

## Patentansprüche

1. Verfahren zum Abdichten einer Abdichtschicht (7) gegen einen Rand einer Entwässerungsöffnung eines Kanals unter Verwendung eines Klemmrings (1), wobei
die Abdichtschicht (7) mittels des im Kanal geführten Klemmrings (1) gegen eine Wand (8) im Kanal gepresst wird, und
der Klemmring (1) aus einem kreisförmigen Rahmenring (11) und einem Dehnungsring (12) gebildet ist, die durch mechanische Verriegelungsmittel (14) miteinander verbunden sind, wobei der Rahmenring (11) und der Dehnungsring (12) zusammen einen Zylinderaußenmantel bilden, sodass
beim Beginn der Abdichtung, der Klemmring (1) einen Durchmesser aufweist, der kleiner ist als der Durchmesser der Entwässerungsöffnung des Kanals,
der Klemmring (1) zu der Entwässerungsöffnung geführt wird, wo er gegen die Abdichtschicht (7) angelegt wird,
der Rahmenring (11) und Dehnungsring (12) des Klemmrings (1) durch Anziehen der mechanischen Verriegelungsmittel (14) gegeneinander gepresst werden, sodass
der Rahmenring (11) und der Dehnungsring (12), die gegeneinander gepresst sind, eine radial ausdehnende Verformung des Klemmrings (1) bewirken, und der Klemmring (1) die Abdichtschicht (7) gegen die Wand (8) und/oder einen darin angeordneten Dichtring (23) presst,
das Verfahren das Bilden einer Fläche (15) am Rahmenring (11) und das Bilden einer zweiten Fläche (18) am Dehnungsring (12) einschließt, **dadurch gekennzeichnet, dass**
die Fläche (15) des Rahmenrings (11) und die zweite Fläche (18) des Dehnungsrings (12) zur Wand (8) des Kanals hin ausgerichtet sind und zueinander hin geneigt sind, um eine konische Ausnehmung zu bilden, wobei in dieser Ausnehmung eine Klemmringdichtung (13) eingesetzt ist, wobei
die mechanischen Verriegelungsmittel (14), die den Rahmenring (11) und den Dehnungsring (12) gegeneinander pressen, einen Vorsprung in der Klemmringdichtung (13) erzielen, der sich außerhalb des Zylinderaußenmantels des Klemmrings (1) erstreckt, und
die Klemmringdichtung (13) gegen die Wand (8) des Kanals und/oder den darin angeordneten Dichtring (23) presst.

2. Verfahren nach Anspruch 1, **gekennzeichnet durch**
Bereitstellen der Klemmringdichtung (13) mit einem Druckring (22), der an der Fläche (15) des Rahmenrings (11) und der zweiten Fläche (18) des Dehnungsrings (12) anliegt, wobei
das Zusammendrücken der Klemmringdichtung (13) den Druckring (22) zur Wand (8) des Kanals hin schiebt.

3. Klemmring (1) zur Montage in einem Bodenablauf (2) oder einem ähnlichen Kanal, wobei ein solcher Klemmring (1) Folgendes umfasst:
einen Rahmenring (11),
einen Dehnungsring (12), der an dem Rahmenring (11) anliegt, wobei der Rahmenring (11)und der Dehnungsring (12) zusammen einen Zylinderaußenmantel bilden,
Verriegelungsmittel (14), die den Rahmenring (11) und Dehnungsring (12) mechanisch gegeneinander pressen, und
eine Klemmringdichtung (13), die den Durchmesser des Klemmrings (1) durch die kombinierte Wirkung des Rahmenrings (11) und des Dehnungsrings (12) vergrößert, wobei
der Rahmenring (11) eine Fläche (15) umfasst, und
der Dehnungsring (12) eine zweite Fläche (18) umfasst, **dadurch gekennzeichnet, dass**
die Fläche (15) des Rahmenrings (11) und die zweite Fläche (18) des Dehnungsrings (12) radial nach außen ausgerichtet sind und zueinander hin geneigt sind, um eine konische Ausnehmung zu bilden, wobei in dieser Ausnehmung die Klemmringdichtung (13) eingesetzt ist, sodass
der Vorsprung der Klemmringdichtung (13) aus dem Zylinderaußenmantel des Klemmrings (1) derart angeordnet ist, dass er von einem Abstand zwischen dem Rahmenring (11) und dem Dehnungsring (12), der durch die mechanischen Verriegelungsmittel (14) gesteuert wird, abhängig ist.

4. Klemmring (1) nach Anspruch 3, **dadurch gekennzeichnet, dass** die Klemmringdichtung (13) einen Druckring (22) umfasst, der an der Fläche (15) des Rahmenrings (11) und der zweiten Fläche (18) des Dehnungsrings (12) anliegt.

5. Klemmring nach Anspruch 3 oder 4, **dadurch gekennzeichnet, dass** die Klemmringdichtung (13) aus einem elastischen Material hergestellt ist.

## Revendications

1. Procédé de scellement d'une couche d'étanchéité (7) contre un bord d'une ouverture de drainage d'un conduit en utilisant un anneau de serrage (1), selon lequel
la couche d'étanchéité (7) est pressée contre une paroi (8) dans le conduit au moyen de l'anneau de serrage (1) guidé dans le conduit, et
l'anneau de serrage (1) est formé à partir d'un anneau circulaire de support (11) et d'un anneau d'expansion (12) reliés l'un à l'autre par des moyens de verrouillage mécaniques (14), ledit anneau de support (11) et ledit anneau d'expansion (12) formant ensemble un manteau cylindrique extérieur de telle sorte que,
au début du scellement, l'anneau de serrage (1) présente un diamètre qui est plus petit que le diamètre de l'ouverture de drainage du conduit,
l'anneau de serrage (1) est guidé jusqu'à l'ouverture de drainage où il est placé contre la couche d'étanchéité (7),
l'anneau de support (11) et l'anneau d'expansion (12) de l'anneau de serrage (1) sont pressés l'un contre l'autre en serrant les moyens de verrouillage mécaniques (14), de telle sorte que
l'anneau de support (11) et l'anneau d'expansion (12) pressés l'un contre l'autre provoquent une déformation d'expansion radiale de l'anneau de serrage (1), et l'anneau de serrage (1) presse la couche d'étanchéité (7) contre la paroi (8) et/ou un anneau d'étanchéité (23) dans celle-ci,
le procédé incluant le formage, sur l'anneau de support (11), d'une face (15), et le formage, sur l'anneau d'expansion (12), d'une deuxième face (18), **caractérisé en ce que**
la face (15) de l'anneau de support (11) et la deuxième face (18) de l'anneau d'expansion (12) sont orientées vers la paroi (8) du conduit et sont inclinées l'une vers l'autre pour former un évidement conique, évidement dans lequel un joint d'étanchéité (13) d'anneau de serrage est installé, de telle sorte que
les moyens de verrouillage mécaniques (14) pressant l'anneau de support (11) et l'anneau d'expansion (12) l'un contre l'autre réalisent une saillie dans le joint d'étanchéité (13) d'anneau de serrage, s'étendant à l'extérieur du manteau cylindrique extérieur de l'anneau de serrage (1), et
le joint d'étanchéité (13) d'anneau de serrage presse contre la paroi (8) du conduit et/ou l'anneau d'étanchéité (23) dans celle-ci.

2. Procédé selon la revendication 1, **caractérisé par**
le fait de pourvoir le joint d'étanchéité (13) d'anneau de serrage d'un anneau de pression (22) qui vient en appui contre la face (15) de l'anneau de support (11) et la deuxième face (18) de l'anneau d'expansion (12), dans lequel procédé
la compression du joint d'étanchéité (13) d'anneau de serrage pousse ledit anneau de pression (22) vers la paroi (8) du conduit.

3. Anneau de serrage (1) pour installation dans une bonde de sol (2) ou un conduit analogue,
un tel anneau de serrage (1) comprenant
un anneau de support (11),
un anneau d'expansion (12) venant en appui contre l'anneau de support (11), ledit anneau de support (11) et ledit anneau d'expansion (12) formant ensemble un manteau cylindrique extérieur,
des moyens de verrouillage (14) pressant mécaniquement l'anneau de support (11) et l'anneau d'expansion (12) l'un contre l'autre, et
un joint d'étanchéité (13) d'anneau de serrage augmentant le diamètre de l'anneau de serrage (1) par l'effet combiné de l'anneau de support (11) et de l'anneau d'expansion (12), dans lequel
l'anneau de support (11) comprend une face (15), et
l'anneau d'expansion (12) comprend une deuxième face (18), **caractérisée en ce que**
la face (15) de l'anneau de support (11) et la deuxième face (18) de l'anneau d'expansion (12) sont orientées radialement vers l'extérieur et sont inclinées l'une vers l'autre pour former un évidement conique, dans lequel évidement le joint d'étanchéité (13) d'anneau de serrage est installé, de telle sorte que
la saillie du joint d'étanchéité (13) d'anneau de serrage à partir du manteau cylindrique extérieur de l'anneau de serrage (1) est agencée de manière à être dépendante d'une distance entre l'anneau de support (11) et l'anneau d'expansion (12) commandée par les moyens de verrouillage mécaniques (14).

4. Anneau de serrage (1) selon la revendication 3, **caractérisé en ce que** le joint d'étanchéité (13) d'anneau de serrage comprend un anneau de pression (22) qui vient en appui contre la face (15) de l'anneau de support (11) et la deuxième face (18) de l'anneau d'expansion (12).

5. Anneau de serrage selon la revendication 3 ou la revendication 4, **caractérisé en ce que** le joint d'étanchéité (13) d'anneau de serrage est fait d'un matériau élastique.
